## Europäisches Patentamt
## European Patent Office
## Office européen des brevets

(19)

(11) Numéro de publication: **0 070 446**
A2

(12)
# DEMANDE DE BREVET EUROPEEN

(21) Numéro de dépôt: **82105979.7**

(22) Date de dépôt: **05.07.82**

(51) Int. Cl.³: **G 01 D 5/34**

(30) Priorité: **17.07.81 CH 4693/81**

(43) Date de publication de la demande: **26.01.83**
**Bulletin 83/4**

(84) Etats contractants désignés: **AT DE FR GB**

(71) Demandeur: **TESA S.A., Rue Bugnon 38,**
**CH-1020 Renens (CH)**

(72) Inventeur: **Thouanel, Jacques, Avenue Général**
**Guisan 58, CH-1009 Pully (CH)**

(74) Mandataire: **Misrachi, Alfred, 15, Ch. de la Plantaz,**
**CH-1024 Ecublens (CH)**

(54) **Dispositif de détection incrémental-optique des déplacements relatifs de deux objets matériels.**

(57) Dispositif dans lequel l'un des deux objets est une règle (5) présentant une surface réfléchissante (9) de granulation quelconque mais régulière et dont l'autre est un réticule (4) marqué d'un réseau de traits parallèles et équidistants perpendiculaires au déplacement (f) de la règle.

Un émetteur de rayons lumineux (2), un récepteur photo-sensible (3) et le réticule (4) sont fixés dans un boîtier (1) et disposés dans un plan de réflexion tel que les rayons lumineux sont réfléchis par la règle sur le récepteur au travers du réticule. La règle est guidée dans une coulisse (6-7) fixée au boîtier.

La superposition de l'ombre du réseau et de la lumière diffusée par la règle produit sur le récepteur une image lumineuse qui se reproduit de manière cyclique à chaque pas d'avance de la règle correspondant au pas du réseau, phénomène représentatif de son déplacement.

Dispositif de détection incrémental-optique des déplacements relatifs de deux objets matériels.

La présente invention se rapporte à un dispositif de détection incrémental-optique des déplacements relatifs de deux objets matériels comportant un émetteur de rayons lumineux et un récepteur photosensible disposés en regard des deux objets en question et en positions fixes par rapport à l'un d'eux, et dans lequel ces deux objets présentent des états de surface complémentaires propres à produire sur le récepteur des effets de contrastes lumineux alternés dont le nombre de phases est proportionnel à leur déplacement relatif.

On connaît déjà des instruments de mesure comportant un dispositif de détection de ce genre dans lequel les deux objets susdits sont constitués par une paire de règles transparentes dont l'une est montée fixe dans un boîtier constituant référence et dont l'autre est montée mobile dans ce boîtier, face à la règle fixe, et est reliée à un organe dont on désire connaître les déplacements, tel que par exemple un palpeur. Ces deux règles transparentes sont finement marquées de lignes parallèles équidistantes de manière à former un réseau de traits alternés d'opacité différente dont le pas est identique sur les deux règles. Un faisceau lumineux en provenance d'un émetteur est dirigé à travers les deux échelles sur un récepteur à cellule photo-sensible situé de l'autre côté de ces échelles par rapport à l'émetteur. Le mouvement relatif des deux échelles module l'intensité de la lumière reçue par le récepteur par effet d'alternance de sombres et de clairs. En réponse à cette modulation, ce dernier produit un signal électrique dont le nombre de phases est proportionnel au déplacement d'une règle par rapport à l'autre, du fait que chacune de ces phases est significative d'un pas d'avance correspondant au pas du réseau de traits.

Le signal ainsi produit par ce type de dispositif de détection est ensuite traduit en valeurs de mesures qui sont affichées par exemple sur un tableau d'affichage digital, après traitement dans un circuit comprenant un compteur d'impulsions.

L'invention a pour but une simplification de ce genre de dispositif de détection incrémental-optique permettant une extension aisée de son domaine d'application, notamment au contrôle des déplacements de pièces ou d'outils dans des processus d'usinage, à la commande automatique des machines et, sous certaines conditions, à la détection des déplacements d'un mobile.

A cet effet, le dispositif de détection incrémental-optique des déplacements relatifs de deux objets matériels selon l'invention est caractérisé en ce que le premier de ces deux objets comporte une surface réfléchissante de granulation quelconque sensiblement régulière sur toute sa longueur utile et étendue dans la direction des déplacements à détecter, en ce que le second objet est constitué par un réticule présentant un réseau de signes contrastés équidistants au moins dans ladite direction, en ce que au moins l'émetteur de rayons lumineux, le récepteur photo-sensible et le réticule sont disposés tous trois d'un même côté du premier objet et en regard de sa surface réfléchissante dans un boîtier comportant un élément de positionnement destiné à le maintenir à hauteur constante d'une zone choisie de cette surface réfléchissante, et dans lequel boîtier ces trois organes sont disposés dans un plan de réflexion tel que les rayons lumineux en provenance de l'émetteur sont réfléchis sur le récepteur par ladite zone choisie, le réticule étant disposé pour sa part sur le trajet des rayons lumineux interceptés par le récepteur, entre l'émetteur et ce dernier.

De la sorte, par comparaison avec l'état de la technique précité, seul le second objet, le réticule, nécessite le marquage d'un réseau de signes, opération précise et d'autant plus délicate que le degré de résolution désiré est élevé. La qualité minimale requise pour l'état de surface du premier objet et le fait que l'ensemble des éléments de l'optique de détection se situe d'un seul côté de cet objet permettent d'autre part la détection directe et in-situ des déplacements d'un nombre important de pièces mécaniques d'une machine quelconque, ces pièces étant utilisées comme premier objet. Ainsi par exemple la tige d'un vérin de positionnement d'un outil, la périphérie d'une roue, ou bien également une coulisse ou un rail sur lequel se déplace un mobile peuvent être directement utilisés, le boîtier des éléments de l'optique de détection étant fixé par son élément de positionnement dans le premier cas sur un élément fixe de la machine, tel que par exemple son bâti, et dans le second cas sur le châssis du mobile.

Le principe du système de détection incrémental-optique sur lequel est basé ce dispositif ressort d'une hypothèse émise par l'inventeur selon laquelle l'image reçue par le récepteur d'un tel arrangement optique est formée de la superposition d'une figure réfléchie constituée par l'ombre portée du réseau du réticule et d'une figure diffusée constituée par l'albédo de la surface réfléchissante du premier objet.

Chaque fois que cette surface se déplace d'un pas du réseau, elle produit sur le récepteur une figure de diffusion identique. La figure de réflexion, elle, est absolument indépendante du déplacement. Lorsque la surface avance, l'image lumineuse résultante captée par le récepteur se reproduit donc de manière cyclique avec une période égale ou pas du réseau du réticule projeté sur cette surface.

Des essais probatoires ont été faits avec des règles rectilignes et courbes dont la surface présentait des granulations différentes allant de celle d'une surface métallique rectifiée à celle de la toile émeri grossière, prouvant la justesse de cette hypothèse. Parallèlement à ces essais, une formulation mathématique a été faite et exploitée sur ordinateur, par intégration d'une fonction créneau représentative de l'image du réseau du réticule et d'une fonction purement aléatoire représentative de l'albédo de la zone réfléchie de la surface en question. Ces travaux ont conduit à des résultats conformes à ceux des essais probatoires.

Le dessin annexé représente deux formes d'exécution de l'objet de l'invention, ainsi que trois variantes de la disposition de ses éléments optiques.

La figure 1 est une vue en élévation-coupe longitudinale de la première forme d'exécution.

La figure 2 est une coupe transversale selon l'axe de coupe I-I de la figure 1.

La figure 3 est une vue en élévation de la deuxième forme d'exécution.

La figure 4 en est une coupe transversale selon l'axe de coupe II-II de la figure 3.

Les figures 5 et 6 sont respectivement une vue en élévation et une vue en plan schématiques d'un arrangement optique commun à ces deux formes d'exécution.

Les figures 7, 8 et 9 sont des schémas illustrant les trois variantes.

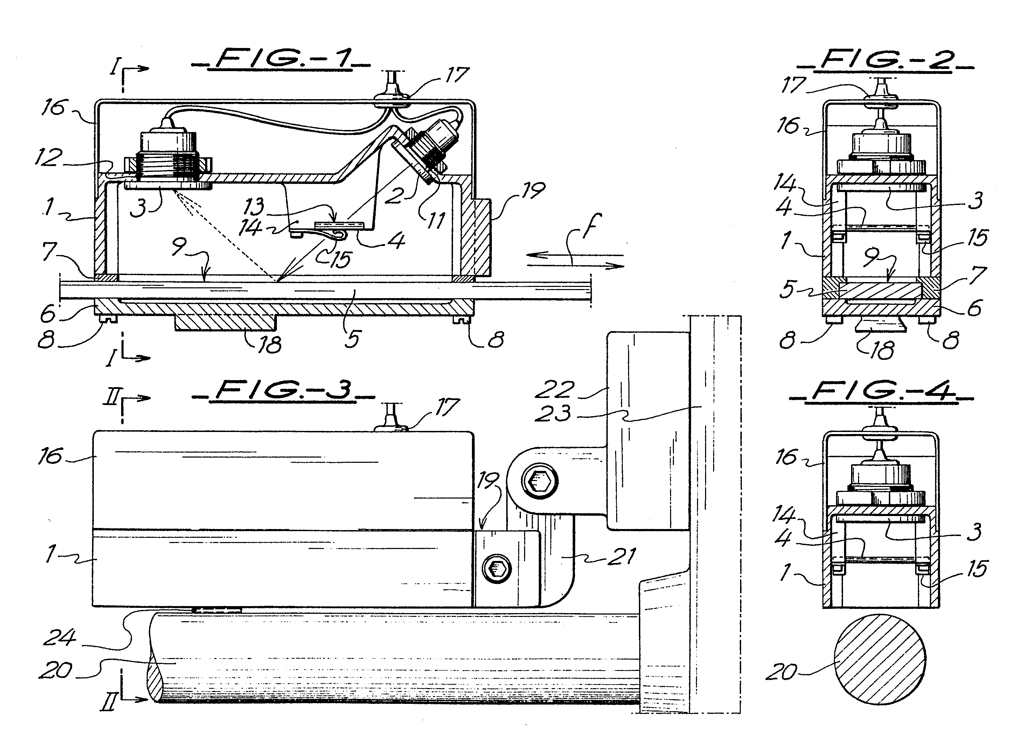

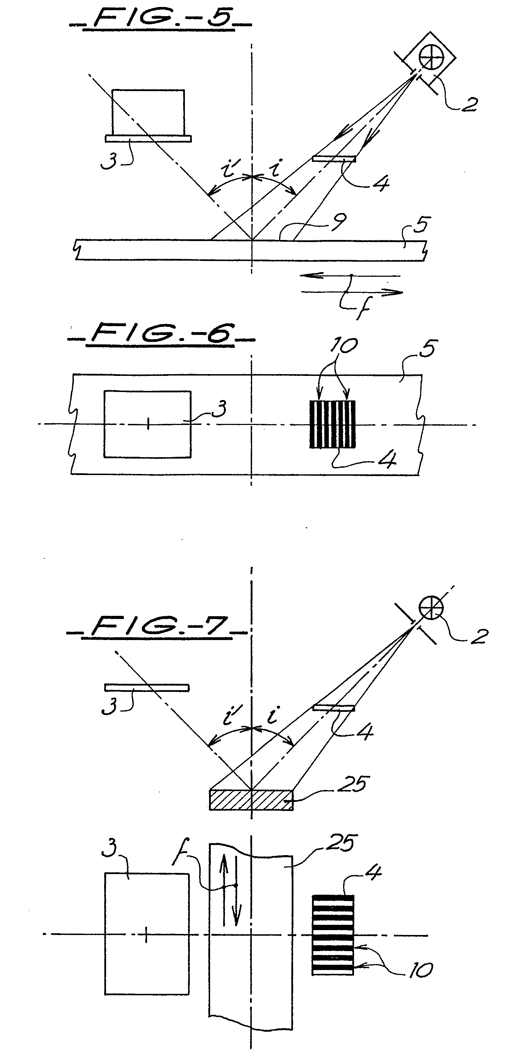

La première forme d'exécution du dispositif représentée figure 1 et 2 ainsi que par les schémas des figures 5 et 6, comporte un boîtier 1 à fond ouvert dans lequel sont disposés un émetteur de rayons lumineux 2, un récepteur photosensible 3 et un réticule 4. Ces trois organes sont situés d'un même côté et en regard d'une règle métallique 5 par rapport à laquelle ce boîtier est maintenu à hauteur fixe par un élément de positionnement ici constitué par l'assemblage d'une plaque 6 et d'une coulisse 7 maintenus par quatre vis 8 contre le fond ouvert du boîtier 1, et dans lequel cette règle peut se déplacer par translation dans la direction de sa longueur, selon les flèches f.

Cette règle 5, de section rectangulaire, est rectifiée, afin que sa face supérieure 9, orientée vers les trois organes précités, présente une surface réfléchissante de granulation régulière sur toute sa longueur utile qui n'est pas ici limitée sur la figure 1 mais qui est choisie en accord avec la capacité de détection désirée de son déplacement.

Le réticule 4, visible également en vue de dessus figure 6, réalisé en matériau transparent, présente un réseau de traits contrastés parallèles et équidistants 10 dont la direction est perpendiculaire à celle des déplacements de la règle 5. L'écart entre ces traits est accordé au degré de résolution désiré.

Dans le boîtier 1, l'émetteur 2, le récepteur 3 et le réticule 4 sont disposés dans un plan vertical de réflexion tel que les rayons lumineux en provenance de l'émetteur sont réfléchis sur le récepteur par une zone déterminée de la surface réfléchissante de la règle 5, le réticule étant disposé pour sa part sur le trajet des rayons lumineux interceptés par le récepteur, entre ce dernier et l'émetteur. Cet arrangement est représenté pour cette première forme d'exécution par les figures 5 et 6 sur lesquelles on observe que l'émetteur 2 est une surce de lumière ponctuelle dont les rayons projettent l'ombre du réseau de traits 10 du réticule 4 sur une zone limitée de la surface réfléchissante 9 de la règle 5 sous un angle d'incidence i, et que le récepteur 3 recueille la lumière renvoyée par cette zone sous un angle de réflexion i'=i. Le plan du réticule 4 et celui de la surface réfléchissante 9 de la règle sont parallèles entre eux afin que le pas du réseau de traits projeté sur cette surface reste constant, cette dernière condition étant indispensable pour assurer le phénomène de détection sur lequel est basé l'invention et qui a déjà été expliqué.

Les trois organes de cette optique sont montés à positions fixes dans le boîtier 1 et de manière amovible, afin de permettre leur remplacement. L'émetteur 2 et le récepteur 3 sont engagés dans deux trous 11 et 12 de la paroi supérieure de ce boîtier dans lesquels ils sont maintenus par vissage d'un écrou sur leurs corps et le réticule 4 est disposé en pont dans deux encoches 13 portées par deux suspentes 14 venant de forme avec les deux parois latérales du boîtier et est maintenu dans ces encoches par
deux lames de ressort 15. Un couvercle 16, assurant la protection de l'émetteur et du récepteur et comportant une sortie 17 des fils de liaison de ces deux organes, chapeaute
le boîtier 1 par engagement élastique dans une rainure de
pourtour de ce dernier. Enfin le boîtier 1 et la plaque de
fond 6 de son élément de positionnement présentent deux
éléments de fixation 18 et 19 constitués ici chacun par un
tenon en queue d'aronde.

Cette première forme d'exécution est appropriée à
l'utilisation dans un appareil de mesure tel que par exemple
une colonne de mesure sur laquelle le boîtier 1 sera fixé
par son élément de fixation 18 et au palpeur duquel sera
reliée la règle 5. La cellule photo-sensible sera reliée à
une unité de traitement appropriée, de type connu, comportant par exemple un tableau d'affichage des valeurs de déplacements détectés, ou bien à une unité de classement, de
type connu également, comportant une mémoire.

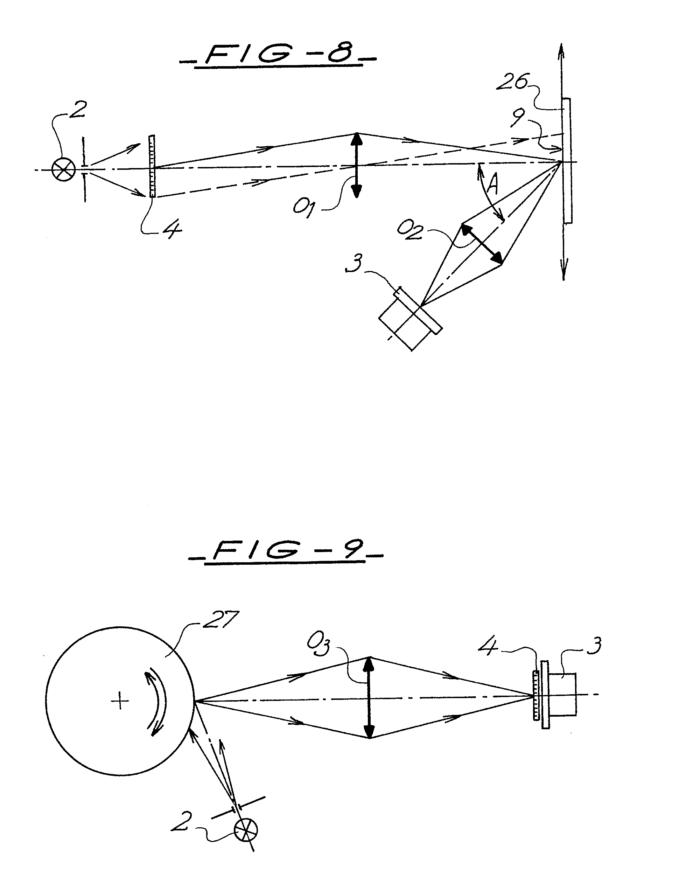

La seconde forme d'exécution représentée figures 3
et 4 est destinée à la détection in-situ des déplacements
de pièces mécaniques telles que l'arbre 20 de commande de
positionnement d'un outil d'une machine automatique, représenté sur ces deux figures.

Dans cette seconde forme d'exécution, l'agencement
du boîtier 1 et de ses organes internes, ainsi que leurs
natures, sont exactement les mêmes que dans la première
forme d'exécution qui vient d'être décrite et représentée
figures 1, 2, 5 et 6.

Par contre l'élément de positionnement du boîtier 1
est ici constitué par un support orientable 21 fixé à l'élément de fixation 19 de ce boîtier et comportant un plateau
magnétique de maintien 22 apposé sur un élément du bâti 23
de la machine considérée, proche de la sortie de l'arbre 20.

Cet arbre 20 remplace ici la règle 5 de l'exemple
précédent. Il doit se présenter dans la même position relative par rapport au boîtier 1 et ses seuls mouvements doivent être de translation selon son axe de révolution, à l'exclusion de tout mouvement de rotation. Le réglage du positionnement du boîtier 1 par rapport à cet arbre se fait de manière aisée, par exemple à l'aide d'une cale d'épaisseur 24 engagée entre eux. Cet arbre 20 doit également présenter l'état de surface requis c'est-à-dire être réfléchissant et de granulation régulière, ce qui est généralement le cas de la plupart des pièces mécaniques de ce genre. On signale toutefois que même dans le cas inverse un simple ponçage régulier à l'abrasif sur toute la longueur utile, en long ou en travers, suffit pour rendre possible la détection.

Cette seconde forme d'exécution peut être employée pour le contrôle de l'amplitude des déplacements de l'outil commandés par l'arbre 20, par liaison à une unite de traitement comportant un organe d'affichage des valeurs des déplacements détectés. Elle peut aussi être employée dans une commande automatique dans laquelle l'arbre 20 est lié à l'organe réglé, par liaison à une unité de traitement insérée dans la boucle de régulation d'une telle commande. Elle peut encore être employée pour la détection des déplacements d'un mobile le long d'une glissière ou d'un rail; dans ce cas le boîtier 1 sera fixé sur le châssis glissant ou roulant de ce mobile, en face de la glissière ou du rail et son positionnement par rapport à ceux-ci pourra être assuré de la même manière aisée à l'aide de la cale d'épaisseur 24. Bien entendu la glissière ou le rail en question devra présenter la qualité de surface requise.

Des variantes pourront être apportées .

Ainsi dans une première variante représentée figure 7, le plan d'incidence et de réflexion i+i' n'est plus aligné dans la direction des déplacements de l'objet à détecter 25, qui est une règle, mais est perpendiculaire à ladite direction. Dans ce cas, qui peut être avantageux pour ces questions d'encombrement dans la direction considérée, les traits parallèles et équidistants 10 du réseau du réticule 4 doivent conserver leur perpendicularité par rapport à la direction des déplacements de l'objet 25. L'agencement et le positionnement relatif de l'émetteur 2, du récepteur 3 et du réceptacle 4 est par contre identique dans le boîtier 1 qui n'est pas représenté sur cette figure. Dans la première forme d'exécution décrite cette variante peut être appliquée par un changement de longueur et d'orientation de la glissière 7 et de la partie de la plaque de fond 6 collaborant avec cette glissière. Dans la seconde forme d'exécution, aucune adaptation n'est nécessaire.

Des variantes pourront également être apportées dans l'agencement de l'optique de détection disposée dans le boîtier.

Ainsi dans une seconde variante représentée figure 8, les rayons lumineux émis par l'émetteur 2 sont dirigés perpendiculairement à la surface réfléchissante 9 de l'objet détecté, qui est ici aussi une règle 26, au travers du réticule 4 et d'un premier objectif $O_1$ formant sur cette surface l'image du réseau de traits du réticule 4. Un second objectif $O_2$ reprend cette image sous un angle A choisi après diffusion par la surface réfléchissante 9, et la reforme sur le récepteur 3. Cette variante, entre autres avantages inhérents à ce mode de projection d'images, permet une plus grande liberté dans la disposition de l'émetteur, du récepteur et du réticule à l'intérieur du boîtier, du fait qu'elle libère de la relation liant l'angle d'incidence i à l'angle de réflexion i' des exemples précédents et remplace celle-ci par le libre choix de l'angle A.

La troisième variante représentée figure 9 présente ces mêmes avantages sous une distribution différente encore appliquée à la détection des déplacements de la périphérie d'un plateau cylindrique 27. Dans cette troisième variante, l'émetteur 2 éclaire une zone déterminée et limitée de la périphérie du plateau 27 sous une incidence rasante pour augmenter le contraste ressortant de la granulation de cette surface. Un objectif $O_3$ forme l'image de la zone éclairée

0070446

sur le réticule 4 qui est ici placé devant le récepteur 3. Ce dernier recueille la lumière transmise par le réticule 4. Dans cette variante, il faut veiller à ce que le pas du réseau projeté sur la périphérie du plateau 27 ne soit pas déformé dans de trop grandes proportions par la courbure de cette surface, afin que le phénomène périodique qui gère la détection puisse se produire. Dans le cas de courbure trop prononcée par rapport à l'étendue du réseau du réticule il y aura lieu d'en tenir compte dans le tracé de ce dernier.

0070446

Revendications

1. Dispositif de détection incrémental-optique des déplacements relatifs de deux objets matériels comportant un émetteur de rayons lumineux et un récepteur photo-sensible disposés en regard des deux objets en question et en positions fixes par rapport à l'un d'eux et dans lequel ces deux objets présentent des états de surface complémentaires propres à produire sur le récepteur des effets de contrastes lumineux alternés dont le nombre de phases est proportionnel à leur déplacement relatif, caractérisé en ce que le premier des deux objets (5-20-25-26-27) comporte un surface réfléchissante (9) de granulation quelconque sensiblement régulière sur toute sa longueur utile et étendue dans la direction des déplacements à détecter, en ce que le second objet est constitué par un réticule (4) présentant un réseau de signes contrastés équidistants au moins dans ladite direction, en ce que au moins l'émetteur de rayons lumineux (2), le récepteur photo-sensible (3) et le réticule (4) sont disposés tous trois d'un même côté du premier objet et en regard de sa surface réfléchissante dans un boîtier (1) comportant un élément de positionnement (6, 7 - 21,22) destiné à le maintenir à hauteur constante d'une zone choisie de cette surface réfléchissante, et dans lequel boîtier ces trois organes sont disposés dans un plan de réflexion tel que les rayons lumineux en provenance de l'émetteur sont réfléchis sur le récepteur par ladite zone choisie, le réticule étant disposé pour sa part sur le trajet des rayons lumineux interceptés par le récepteur, entre l'émetteur et ce dernier.

2. Dispositif selon la revendication 1, caractérisé en ce que le premier objet est un solide de section constante à génératrices rectilignes (5-20, fig. 1 à 6) sur au moins toute sa longueur utile.

3. Dispositif selon les revendications 1 et 2, caractérisé en ce que l'élément de positionnement de son boîtier (1) est constitué par une coulisse (6-7, fig. 1-2) fixée audit boîtier et dans laquelle translate le premier objet (5).

0070446

4. Dispositif selon les revendications 1 et 2, caractérisé en ce que l'élément de positionnement de son boîtier (1) est constitué par un support orientable (21, fig. 3-4) fixé audit boîtier et comportant un élément de maintien (22) destiné à être apposé et immobilisé sur un bâti fixe (23) dans lequel translate le premier objet (20).

5. Dispositif selon la revendication 1, caractérisé en ce que le plan de réflexion dans lequel sont disposés l'émetteur (2), le récepteur (3) et le réticule (4) est étendu dans la direction des déplacements du premier objet (5-20, fig. 1 à 6).

6. Dispositif selon la revendication 1, caractérisé en ce que le plan de réflexion dans lequel sont disposés l'émetteur (2), le récepteur (3) et le réticule (4) est perpendiculaire à la direction des déplacements du premier objet(25, fig. 7).

_FIG.-1_

_FIG.-2_

_FIG.-3_

_FIG.-4_

1/3

OC70446

_FIG.-5_

_FIG.-6_

_FIG.-7_

_FIG -8_

_FIG -9_